# EUROPEAN PATENT SPECIFICATION

(11) **EP 1 903 544 B1**
(45) Date of publication and mention of the grant of the patent: **27.10.2010**
(21) Application number: 06121078.7
(22) Date of filing: 21.09.2006
(51) Int. Cl.: G09G 3/20, G09G 3/36

(54) **Cross-talk correction for a liquid crystal display**
Verfahren zur Korrektur des Übersprechens in Flüssigkristallanzeigen
Correction de diaphonie pour affichageurs à cristaux liquides

(43) Date of publication of application: 26.03.2008
(73) Proprietor: RESEARCH IN MOTION LIMITED, Waterloo, Ontario N2L 3W8 (CA)
(72) Inventor: Drader, Marc, Kitchener Ontario N2M 3G7 (CA); Robinson, James, Elmira Ontario N2J 1J1 (CA); Kornilovsky, Alex, Waterloo Ontario N2V 2P4 (CA)
(74) Representative: Patel, Binesh

(56) References cited:
- EP-A1- 1 324 305
- US-A1- 2005 264 492
- US-B1- 6 360 021

## Description

The invention described herein generally relates to computer image analysis and processing. In particular, the invention relates to a method and apparatus for reducing cross-talk on a liquid crystal display.

The conventional colour liquid crystal display includes a liquid crystal layer, and a semitransparent metal oxide layer (typically Indium Tin Oxide) that covers the liquid crystal layer. These two layers are sandwiched between two transparent substrates, which are typically provided as glass or plastic plates.

In a passive matrix display, one of the transparent substrates includes a series of parallel data electrodes, and the other transparent substrates includes a series of parallel scanning electrodes that are arranged at a right angle to the data electrodes. The pixels are addressed by applying a pulse to the associated data electrode, while grounding the associated scanning electrode.

In an active matrix display, one of the transparent substrates includes a matrix of thin-film transistors and storage capacitors. The display includes a transistor for each pixel in the display. The gate electrodes of the transistors in each row are connected together via a common scanning electrode, and the source electrodes of the transistors in each column are connected to a respective source driver. The pixels can be individually addressed by pulsing the scanning electrodes sequentially, and by applying the appropriate voltage signals to the data lines. The storage capacitors maintain the voltage applied to each pixel until the next voltage signal is applied.

In each case, the optical transmittance of the display changes as the liquid crystal moves in response to the voltage applied to each corresponding section of the metal oxide layer. Therefore, the opacity of each pixel can be controlled via the voltage applied to the scanning and data electrodes.

Cross-talk is a problem experienced with some liquid crystal displays in which the voltage applied to pixels on one part of the display influences the transmittance of the liquid crystal on pixels on other parts of the display. This problem is a result of several factors, including parasitic capacitance between the source and gate lines, and voltage drops due to the resistance of the metal oxide layer. As a result, cross-talk is particularly apparent when the display is rendering an image comprising a large bright (white) area on a dark (black or grey) background, or vice versa. In these cases, the bright area appears to bleed into the dark area, or vice versa.

Attempts have been made to reduce the likelihood of cross-talk occurring on a liquid crystal display. For instance, Howard (US 4,845,482) describes applying gating signals to the scanning electrodes for a shorter than normal interval, applying the data signal to the data electrodes during this shorter interval, and applying a compensation signal to the data electrodes during the remainder of the normal interval.

Choi (US 5,774,103) describes driving the data electrodes from +Vd to -Vd through an intermediate voltage level.

Bitzakidis (US 5,798,740) and Kawamori (US 5,691,739) describe applying a compensation voltage to the data signal applied to each column electrode. Bitzakidis bases the compensation voltage on the capacitance of the transistors and the values for all the pixels in the same column. Kawamori bases the compensation voltage on the number of polarity inversions during each display period.

Bassetti (US5,670,973) describes applying boost voltages to the row and column electrodes in proportion to the number of ON pixels in a row or column, the number of adjacent ON-OFF and OFF-ON pixel pairs in each column, and the position of each such pixel in each row.

All these implementations require modifications to the display drive circuitry or the glass patterning mask tooling.

Murata (US 2004/0239587) describes, for each scan line, determining the average pixel value for the scan line, and then, for each pixel on the scan line, calculating the difference between each pixel value and the calculated average. The difference figures are input into a correction level determining unit that generates correction values based on the difference figures and a non-linear correction function. The correction values are then input into a correction unit that adjusts the value of each pixel based on the corresponding correction value.

Fig. 6 of the patent application depicts a white box surrounded by gray space, and the adjusted pixel values for each pixel on the scan line. As shown, for the line A-A' passing through the white box, the pixel values for the gray space to the left and right of the white box are increased by the correction value (a), while the pixel values for the white box remain unchanged. However, for the line B-B' extending through the gray space below the white box, the pixel values for the entire line remain unchanged thereby creating the possibility of a visual discontinuity between the gray space above/below the box and the gray space to the left/right of the box.

### GENERAL

According to a first aspect of the invention described herein, there may be provided a method for reducing cross-talk on a liquid crystal display comprising the steps as defined in claim 1.

According to another aspect of the invention, there may be provided a handheld computing device according to claim 7.

According to another aspect of the invention, there may be also provided a computer readable medium carrying processing instructions for a computer which, when executed; cause the computer to implement a method according to claim 1.

### BRIEF DESCRIPTION OF THE DRAWINGS

The invention will now be described, by way of example only, with reference to the accompanying drawings, in which:
Fig. 1 is a front plan view of a handheld computing device having a display processor and a liquid crystal display, according the invention described herein;
Fig. 2 is a schematic diagram depicting the communication pathways existing between the data processing means, the display processor, the LCD display, the function key and the data input means of the handheld computing device depicted in Fig. 1;
Fig. 3 is a schematic diagram depicting certain functional details of the handheld computing device;
Fig. 4 is a flow chart depicting the method of reducing cross-talk implemented by the display processor;
Fig. 5 is a representation of the results of the compressing and decompressing operations performed by the method on a sample image;
Fig. 6 is a graph depicting the gain and scale factors used by the method on the intensity values of the pixels in the image;
Figs. 7a, 7b and 7c represent the contents of the frame buffer of the data processing means at various steps in the method; and
Figs. 8a, 8b and 8c represent an image rendered from the contents of the frame buffer, as depicted in Figs. 7a, 7b and 7c, respectively.

### DETAILED DESCRIPTION OF THE PREFERRED EMBODIMENT

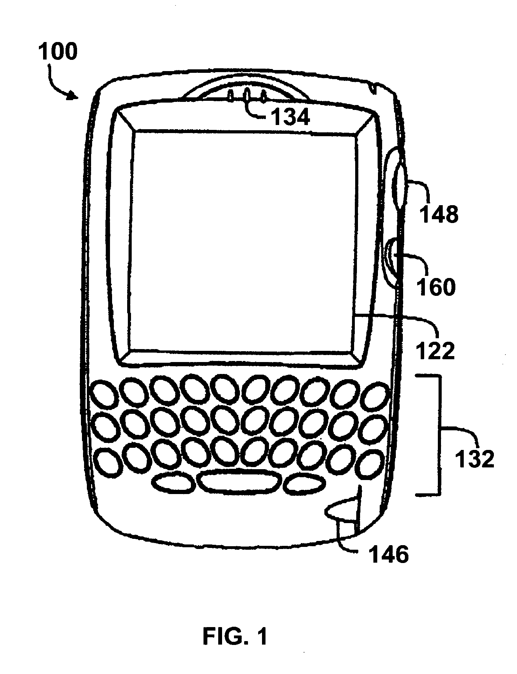

Referring now to Fig. 1, there is shown a handheld computing device, denoted generally as 100, provided according to one aspect of the invention. The handheld computing device 100 includes a display 122, a function key 146, and data processing means 102 (not shown) disposed within a common housing. The display 122 comprises a backlit display having a variable-intensity backlight. In one implementation, the backlit display 122 comprises a transmissive LCD display, and the function key 146 operates as a power on/off switch. Alternately, in another implementation, the backlit display 122 comprises a reflective or trans-reflective LCD display, and the function key 146 operates as a backlight switch.

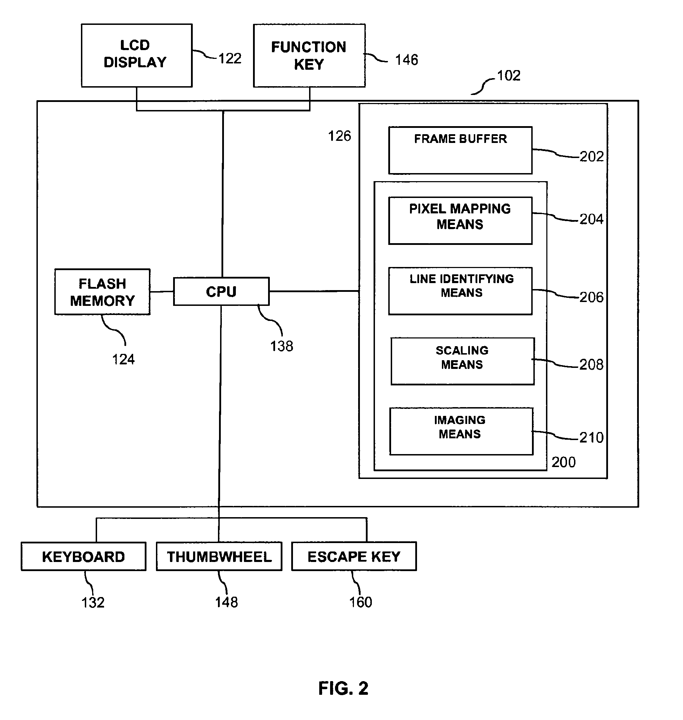

As shown in Fig. 2, the data processing means 102 of the handheld computing device 100 is in communication with the display 122 and the function key 146. In addition to the display 122 and the function key 146, the handheld computing device 100 includes user data input means for inputting data to the data processing means 102. As shown, preferably the user data input means includes a keyboard 132, a thumbwheel 148 and an escape key 160.

The data processing means 102 comprises a microprocessor 138, and a memory 124, 126 (disposed within the housing). The memory 124, 126 computer processing instructions which, when accessed from the memory 124, 126 and executed by the microprocessor 138, implement an operating system, which includes a display processor 200. In addition, the memory 126 includes a frame buffer 202 which the display processor uses to render images on the display 122.

As shown, the computer processing instructions provide the display processor 200 with the functionality of a pixel mapping means 204, a line identifying means 206, a scaling means 208 and an imaging means 210. The function of the pixel mapping means 204, the line identifying means 206, the scaling means 208 and the imaging means 210 will be discussed in greater detail below. However, it is sufficient at this point to note that the pixel mapping means 204, the line identifying means 206, the scaling means 208 and the imaging means 210 configure the display processor 200 with a method that reduces cross-talk on the display 122. It should also be understood that although the display processor 200 is preferably implemented as a set of computer processing instructions, the display processor 200 may be implemented in electronics hardware instead.

Typically, the handheld computing device 100 is a two-way wireless communication device having at least voice and data communication capabilities. Further, preferably the handheld computing device 100 has the capability to communicate with other computer systems on the Internet. Depending on the exact functionality provided, the wireless handheld computing device 100 may be referred to as a data messaging device, a two-way pager, a wireless e-mail device, a cellular telephone with data messaging capabilities, a wireless Internet appliance, or a data communication device, as examples.

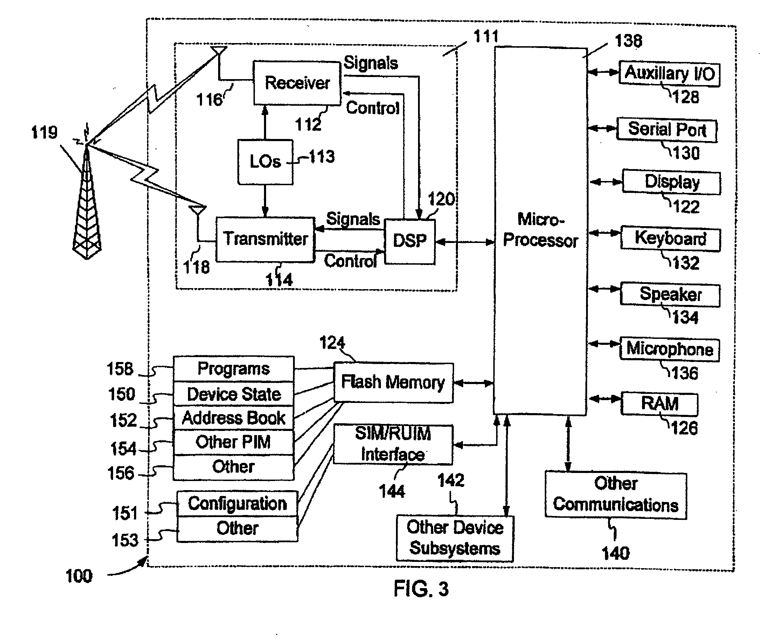

Fig. 3 depicts functional details of the handheld computing device 100. The handheld computing device 100 sends and receives communication signals over the network 119, and comprises a motherboard that includes a communication subsystem 111, a microprocessor 138, and a SIM/RUIM interface 144. The communication subsystem 111 performs communication functions, such as data and voice communications, and includes a receiver 112, a transmitter 114, and associated components such as one or more embedded or internal, antenna elements 116 and 118, local oscillators (LOs) 113, and a processing module such as a digital signal processor (DSP) 120.

Signals received by antenna 116 through communication network 119 are input to the receiver 112, which performs common receiver functions such as frequency down conversion, and analog to digital (A/D) conversion, in preparation for more complex communication functions performed by the DSP 120. In a similar manner, signals to be transmitted are processed by DSP 120 and input to transmitter 114 for digital to analog conversion, frequency up conversion, and transmission over the communication network 119 via antenna 118.

The SIM/RUIM interface 144 is similar to a card-slot into which a SIM/RUIM card can be inserted and ejected like a diskette or PCMCIA card. The SIM/RUIM card holds many key configuration 151, and other information 153 such as identification, and subscriber related information.

The microprocessor 138 controls the overall operation of the device, interacting with device subsystems such as the display 122, flash memory 124, random access memory (RAM) 126, auxiliary input/output (I/O) subsystems 128, serial port 130, keyboard 132, speaker 134, microphone 136, short-range communications subsystem 140, and device subsystems 142. As shown, the flash memory 124 includes both computer program storage 158 and program data storage 150, 152, 154 and 156. The RAM 126 includes a frame buffer 202 which the display processor 200 uses to render images on the display 122.

Computer processing instructions are preferably also stored in the flash memory 124 or other similar non-volatile storage. Other computer processing instructions may also be loaded into a volatile memory such as RAM 126. The computer processing instructions, when accessed from the flash memory 124 and the RAM 126 and executed by the microprocessor 138, define operating system software, computer programs, and operating system specific applications such as the display processor 200. Such computer programs may be installed onto the handheld computing device 100 upon manufacture, or may be loaded through the network 119, the auxiliary I/O subsystem 128, the serial port 130, the short-range communications subsystem 140, or device subsystem 142.

In a data communication mode, a received text message or web page download will be processed by the communication subsystem 111 and output to the display 122, or alternatively to an auxiliary I/O device 128. A user of the handheld computing device 100 may compose data items such as email messages for example, using the keyboard 132. Such composed items may then be transmitted over a communication network through the communication subsystem 111.

For voice communications, overall operation of the handheld computing device 100 is similar, except that received signals would preferably be output to a speaker 134 and signals for transmission would be generated by a microphone 136. Further, the display 122 may provide an indication of the identity of a calling party, the duration of a voice call, or other voice call related information for example.

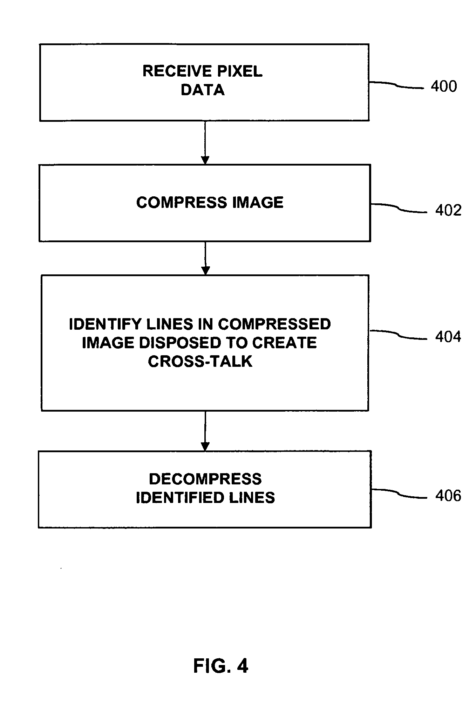

Fig. 4 is a flow chart that depicts, by way of overview, the sequence of steps performed by the display processor 200 according to the invention. Initially, at step 400, the display processor 200 receives pixel data defining an image comprising a plurality of pixels. The received pixel data includes an intensity value associated with each pixel.

At step 402, the display processor 200 compresses the image by reducing the range of the intensity values of all the pixels in the image. This step involves arithmetically adjusting the intensity values of the pixels so that the range of the intensity values of the pixels fall within a desired range.

At step 404, the display processor 200 identifies lines in the compressed image that are disposed to create cross-talk. Then, at step 406, the display processor 200 decompresses the compressed image by applying a scale factor to the adjusted intensity value associated only with the pixels in the identified lines. The scale factor is selected such that a display image that is rendered on the display from the pixel data of the decompressed image will have less cross-talk than a display image rendered on the liquid crystal display from the pixel data received at step 400.

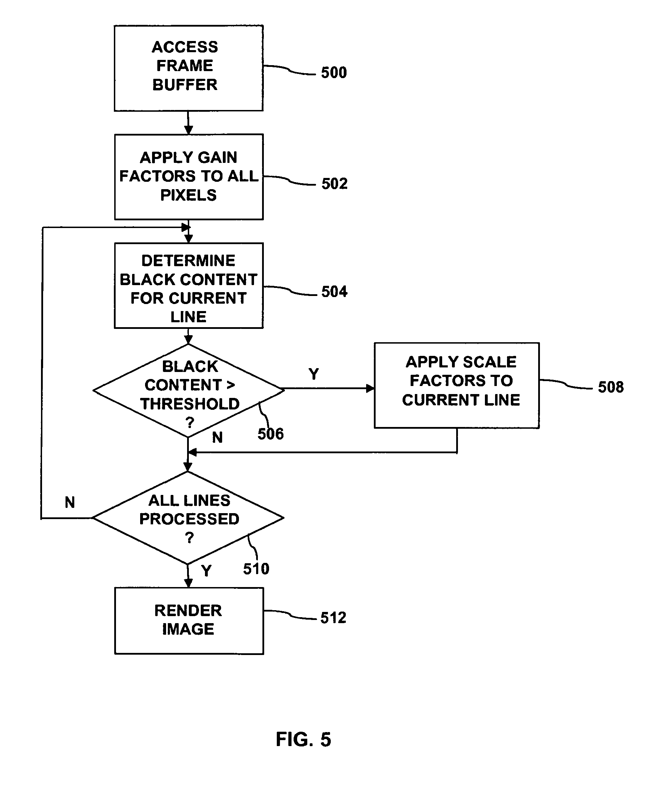

Fig. 5 is a flow chart that depicts, in detail, the sequence of steps performed by the display processor 200. Initially, at step 500, the display processor 200 accesses the frame buffer 202 which contains pixel data defining an image to be rendered on the display 122. The image comprises a plurality of pixels, and the pixel data includes an intensity value for each pixel.

The intensity values of the pixels in the image have a primary maximum possible range that extends between a primary minimum intensity value and a primary maximum intensity value. The primary maximum possible range will depend on the number of data bits used to define the intensity of each pixel.

After accessing the pixel data, the display processor 200 arithmetically adjusts the intensity values of the pixels so that the intensity values of all the pixels fall within a secondary maximum possible range that is smaller than the primary maximum possible range. To do so, at step 502, the pixel mapping means 204 applies a gain factor to the intensity value of each pixel in the image.

After application of the gain factors, the range of the intensity values of all the pixels extends between a secondary minimum intensity value and a secondary maximum intensity value. Preferably, the gain factors are selected so that the secondary minimum intensity value is greater than the primary minimum intensity value, but the secondary maximum intensity value is less than the primary maximum intensity value. Further, preferably the gain factors vary linearly over the primary maximum possible range of the pixel intensity values.

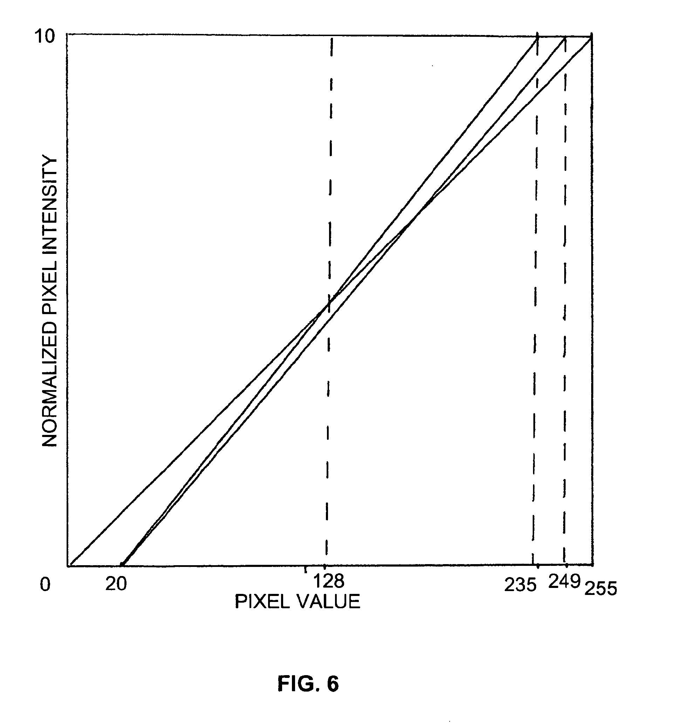

The effect of step 502 on the pixel data can be understood from the example shown in Fig. 6. Reference numeral 600 indicates the maximum possible range of the pixel intensity values at step 500. As shown, eight (8) data bits are used to define the intensity of each pixel, so that the primary minimum intensity value is 0, the primary maximum intensity value is 255, and the primary maximum possible range of the pixel intensity values is 0:255.

Reference numeral 602 indicates the maximum possible range of the pixel intensity values after application of the gain factors. As shown, the secondary minimum intensity value is 20, the secondary maximum intensity value is 235, and the secondary maximum possible range of the pixel intensity values is 20:235. As a result, the gain factor is +20 for a primary pixel intensity value of 0; -20 for a primary pixel intensity value of 255; and 0 for a primary pixel intensity value of 128. Further, the gain factors vary linearly between +20 and -20 over the primary maximum possible range (0:255) of the pixel intensity values.

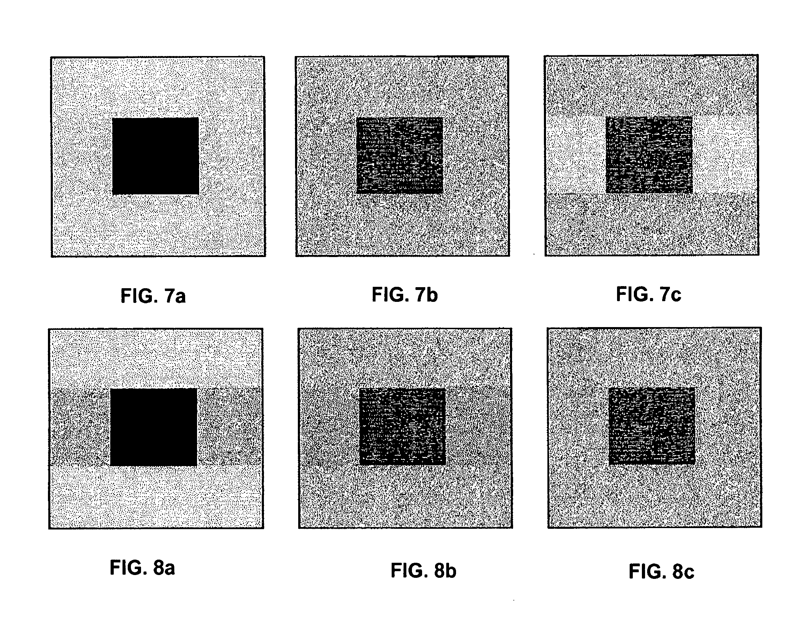

The effect of step 502 on the pixel data is depicted in Figs. 7a, 7b, 8a and 8b. Fig. 7a represents the contents of the frame buffer 202 at step 500, and Fig. 8a represents the image (the "primary image") that would be rendered on the display 122 from the contents of the frame buffer 202 as at step 500. In the example of Fig. 7a, the pixel data in the frame buffer 202 is configured to render on the display 122 a black square on a light grey background. As shown in Fig. 8a, the pixel data image would produce cross-talk on the display 122. Although Fig. 8a indicates that the primary image would be depicted with horizontal cross-talk, depending on the characteristics of the display 122, the primary image could also be depicted with vertical cross-talk.

Fig. 7b represents the contents of the frame buffer 202 at step 502, and Fig. 8b represents the image (the "secondary image") that would be rendered on the display 122 from the contents of the frame buffer 202 as at step 502. As shown in Fig. 7b, after application of the gain factors, the intensity values for all the pixel data in the frame buffer 202 are compressed, such that the range of intensity values of the pixels in the secondary image is smaller than the range of intensity values of the pixels in the primary image. As a result, as shown in Fig. 8b, the black square would appear to be lighter (less black) in the secondary image than in the primary image, and the light grey background would appear to be (less white) in the secondary image than in the primary image.

The display processor 200 then identifies lines in the compressed image that are disposed to create cross-talk. To do so, at step 504 the line identifying means 206 determines the black content for each line in the secondary image. Typically, the line identifying means 206 determines the black content by calculating the average intensity level for all the pixels in each line.

Typically, the line identifying means 206 will determine the black content for each horizontal line. However, the identifying means 206 can also be configured to determine the black content for each vertical line if the display 122 is predisposed to vertical cross-talk.

If the black content for a line is high, the pixel data for that line is considered likely to create cross-talk on the display 122. Accordingly, at step 506, the line identifying means 206 compares the determined black content for the current line of the secondary image against a predetermined threshold. If the determined black content for the current line is greater than the predetermined threshold, at step 508 the scaling means 208 applies a scale factor to the intensity values for the pixels in the current line. However, if the determined black content for the current line is not greater than the predetermined threshold, the scaling means 208 does not apply any scale factor to the current line.

At step 510, the display processor 200 determines whether all lines of the image have been analyzed. If additional lines remain to be analyzed, processing returns to step 504. However, if all lines of the image have been analyzed, at step 512 the imaging means 210 renders the image on the display 122 from the resulting pixel intensity data.

The scale factors applied in step 508 are selected such that the rendered image will have less cross-talk than would a display image rendered on the display 122 from the pixel data of the primary image. To achieve this result, the scale factors are selected such that the intensity values of all the pixels in the lines identified at step 506 (lines that are disposed to create cross-talk) occupy a larger intensity range than the range resulting from the application of the gain factors at step 502. However, the intensity values of all the pixels in the lines identified at step 506 also occupy a narrower intensity range than in the primary image.

Preferably, the scale factors vary linearly over the intensity range of the pixels of the secondary image between a minimum adjustment value and a maximum adjustment value. Typically, the pixels that are associated with the colour black on lines having high black content are least prone to cross-talk, whereas the pixels that are associated with the colour white on lines having high black content are most prone to cross-talk. Accordingly, preferably the minimum and maximum adjustment values are selected such that the intensity values of the pixels that are associated with the colour black on lines having high black content receive a minimal adjustment, whereas the intensity values of the pixels that are associated with the colour white on lines having high black content receive the largest adjustment.

The effect of step 508 on the pixel data can be understood from the example shown in Fig. 6. Reference numeral 602 indicates the maximum possible range of the pixel intensity values after application of the gain factors at step 508. As shown, the secondary minimum intensity value is 20, the secondary maximum intensity value is 235, and the secondary maximum possible range of the pixel intensity values is 20:235.

Reference numeral 604 indicates the maximum possible range of the pixel intensity values after application of the scale factors. As shown, the final minimum intensity value is equal to the secondary minimum intensity value (20). However, the final maximum intensity value is 249, which is greater than the secondary maximum intensity value (235) but less than the primary maximum intensity value (255). Therefore, the final maximum possible range of the pixel intensity values is 20:249. As a result, the scale factor is 0 for a secondary pixel intensity value of 0; and +14 for a secondary pixel intensity value of 235. Further, the scale factors vary linearly between 0 and +14 over the final maximum possible range (20:249) of the pixel intensity values.

The effect of step 508 on the pixel data is depicted in Figs. 7c and 8c. Fig. 7c represents the contents of the frame buffer 202 after step 508, and Fig. 8c represents the image rendered on the display 122 from the contents of the frame buffer 202 as at step 508. As shown in Fig. 7c, after application of the scale factors, the intensity values of the pixels in the lines identified in step 506 that correspond to grey background are increased above the intensity values of those pixels in the secondary image, but not back to the original intensity values those pixels had in the primary image. However, the intensity values of the pixels in the lines identified in step 506 that correspond to the black square remain unchanged. Further, the intensity values for the pixels in the lines not identified in step 506 also remain unchanged.

In effect, decompressing step 508 increases the intensity of the pixels most prone to cross-talk. Compressing step 502 reduces the dynamic range of the pixel intensity of all the pixels in the image, to thereby allow the intensity of the pixels most prone to cross-talk to be increased. As a result, as shown in Fig. 8c, when the imaging means 210 renders the final image on the display 122 from the resulting pixel intensity data, the grey background on the horizontal lines containing the black square appears to have the same intensity as the grey background on the horizontal lines above and below the black square.

The scope of the monopoly desired for the invention is defined by the claims appended hereto, with the foregoing description being merely illustrative of the preferred embodiment of the invention. Persons of ordinary skill may envisage modifications to the described embodiment which, although not explicitly suggested herein, do not depart from the scope of the invention, as defined by the appended claims.

## Claims

1. A method for reducing cross-talk on a liquid crystal display, comprising the steps of:
mapping pixel data of a primary image to pixel data of a secondary image, the primary and secondary images each comprising a plurality of pixels defined by the respective pixel data, the pixel data comprising intensity values for each said pixel, the pixel data mapping comprising applying a gain factor to the intensity values of the pixels of the primary image, a range of the intensity values of the pixels of the secondary image being smaller than a range of the intensity values of the pixels of the primary image;
identifying lines in the secondary image disposed to create cross-talk, the line identifying comprising, for each said line in the secondary image, calculating an average intensity value for all the pixels in said line and comparing the calculated average intensity level against a predetermined threshold, in each said identified line the associated average intensity value being greater than the predetermined threshold; and
adjusting the intensity values of the pixels in the identified lines such that a display image rendered on a liquid crystal display resulting from the pixel intensity adjusting has less cross-talk than if rendered from the pixel data of the primary image, the pixel intensity adjusting comprising applying a respective scale factor to the intensity value of each said pixel in each said identified line, the scale factor being a minimum adjustment value for the pixels least prone to cross-talk, a maximum adjustment value for the pixels most prone to cross-talk, and otherwise a variable adjustment between the minimum adjustment value and the maximum adjustment value determined based on the intensity value of the respective pixel.

2. The method according to Claim 1, wherein the intensity values of the pixels of the secondary image are between a secondary minimum intensity and a secondary maximum intensity, and the scale factors are selected such that, for the pixels in the identified lines, the intensity values proximate the secondary maximum intensity are provided with a larger adjustment than the intensity values proximate the secondary minimum intensity.

3. The method according to Claim 2, wherein a range of the intensity values of the pixels of the identified lines of the rendered image is larger than a range of the intensity values of the pixels of the corresponding lines of the secondary image, but smaller than a range of the intensity values of the pixels of the corresponding lines of the primary image.

4. The method according to Claim 3, wherein the variable adjustment varies linearly between the minimum adjustment value and the maximum adjustment value.

5. The method according to Claim 2, wherein the range of the intensity values of the pixels of the primary image extends between a primary minimum intensity and a primary maximum intensity, and the gain factor varies linearly between the primary minimum intensity and the primary maximum intensity.

6. The method according to Claim 5, wherein the secondary minimum intensity is greater than the primary minimum intensity, and the secondary maximum intensity is less than the primary maximum intensity.

7. A handheld computing device comprising:
a liquid crystal display; and
a display processor coupled to the liquid crystal display, the display processor comprising:
pixel mapping means for mapping pixel data of a primary image to pixel data of a secondary image, the primary and secondary images each comprising a plurality of pixels defined by the respective pixel data, the pixel data comprising intensity values for each said pixel, the pixel mapping means being configured to map the pixel data by applying a gain factor to the intensity values of the pixels in the primary image, a range of the intensity values of the pixels of the secondary image being smaller than a range of the intensity values of the pixels of the primary image;
identifying means for identifying lines in the secondary image disposed to create cross-talk, the line identifying means being configured to identify the lines by, for each said line in the secondary image, calculating an average intensity value for all the pixels in said line and comparing the calculated average intensity value against a predetermined threshold;
scaling means for applying a respective scale factor to the intensity value of each said pixel in each said identified line, the scale factor being a minimum adjustment value for the pixels least prone to cross-talk, a maximum adjustment value for the pixels most prone to cross-talk, and otherwise a variable adjustment between the minimum adjustment value and the maximum adjustment value determined based on the intensity value of the respective pixel; and
imaging means for rendering on the liquid crystal display a display image from the pixel data resulting from the scaling means, the scale factor being selected such that the rendered image has less cross-talk than if rendered from the pixel data of the primary image.

8. The handheld computing device according to Claim 7, wherein the intensity values of the pixels of the secondary image are between a secondary minimum intensity and a secondary maximum intensity, and the scaling means is configured to select the scale factors such that, for the pixels in the identified lines, the intensity values proximate the secondary maximum intensity are provided with a larger adjustment than the intensity values proximate the secondary minimum intensity.

9. The handheld computing device according to Claim 8, wherein the scaling means is configured to manipulate the intensity values of the pixels such that a range of the intensity values of the pixels of the identified lines of the rendered image is larger than a range of the intensity values of the pixels of the corresponding lines of the secondary image, but smaller than a range of the intensity values of the pixels of the corresponding lines of the primary image.

10. The handheld computing device according to Claim 9, wherein the variable adjustment varies linearly between the minimum adjustment value and the maximum adjustment value.

11. The handheld computing device according to Claim 8, wherein the range of the intensity values of the pixels in the primary image extends between a primary minimum intensity and a primary maximum intensity, and the gain factor varies linearly between the primary minimum intensity and the primary maximum intensity.

12. The handheld computing device according to Claim 11, wherein the secondary minimum intensity is greater than the primary minimum intensity, and the secondary maximum intensity is less than the primary maximum intensity.

13. A computer-readable medium carrying processing instructions for a computing device which, when executed, cause the computing device to implement a method for reducing cross-talk on a liquid crystal display according to any one of claims 1 to 6.

## Patentansprüche

1. Verfahren zum Reduzieren von Übersprechen bzw. Cross-Talk auf einer Flüssigkristallanzeige, das die Schritte aufweist:
Zuordnen von Pixeldaten eines primären Bilds zu Pixeldaten eines sekundären Bilds, wobei die primären und sekundären Bilder jeweils eine Vielzahl von Pixeln aufweisen, die durch die jeweiligen Pixeldaten definiert sind, wobei die Pixeldaten Intensitätswerte für jeden dieser Pixel aufweisen,
wobei das Zuordnen von Pixeldaten aufweist ein Anwenden eines Gain- bzw. Leuchtdichte-Faktors auf die Intensitätswerte der Pixel des primären Bilds, wobei ein Bereich der Intensitätswerte der Pixel des sekundären Bilds kleiner ist als ein Bereich der Intensitätswerte der Pixel des primären Bilds;
Identifizieren von Linien in dem sekundären Bild, die angeordnet sind, um Cross-Talk zu erzeugen, wobei das Identifizieren von Linien aufweist, für jede Linie in dem sekundären Bild, Berechnen eines Durchschnittsintensitätswerts für alle Pixel in der Linie und Vergleichen des berechneten Durchschnittsintensitätswerts mit einem vorgegebenen Schwellenwert, wobei in jeder identifizierten Linie der zugehörige Durchschnittsintensitätswert größer ist als der vorgegebene Schwellenwert; und
Anpassen der Intensitätswerte der Pixel in den identifizierten Linien derart, dass ein Anzeigebild, das auf einer Flüssigkristallanzeige gerendert wird, das aus dem Anpassen der Pixelintensität resultiert, weniger Cross-Talk hat als wenn aus den Pixeldaten des primären Bilds gerendert, wobei das Anpassen der Pixelintensität aufweist ein Anwenden eines jeweiligen Skalierungsfaktors auf den Intensitätswert jedes Pixels in der identifizierten Pixellinie, wobei der Skalierungsfaktor ein Minimum-Anpassungswert ist für die Pixel am wenigsten anfällig für Cross-Talk, ein Maximum-Anpassungswert ist für die Pixel am meisten anfällig für Cross-Talk und ansonsten eine variable Anpassung ist zwischen dem Minimum-Anpassungswert und dem Maximum-Anpassungswert, bestimmt basierend auf dem Intensitätswert des jeweiligen Pixels.

2. Verfahren gemäß Anspruch 1, wobei die Intensitätswerte der Pixel des sekundären Bilds zwischen einer sekundären Minimum-Intensität und einer sekundären Maximum-Intensität sind und die Skalierungsfaktoren derart gewählt sind, dass für die Pixel in den identifizierten Linien die Intensitätswerte nahe der sekundären Maximum-Intensität mit einer größeren Anpassung vorgesehen sind als die Intensitätswerte nahe der sekundären Minimum-Intensität.

3. Verfahren gemäß Anspruch 2, wobei ein Bereich der Intensitätswerte der Pixel der identifizierten Linien des gerenderten Bilds größer ist als ein Bereich der Intensitätswerte der Pixel der entsprechenden Linien des sekundären Bilds, aber kleiner als ein Bereich der Intensitätswerte der Pixel der entsprechenden Linien des primären Bilds.

4. Verfahren gemäß Anspruch 3, wobei die variable Anpassung linear zwischen dem Minimum-Anpassungswert und dem Maximum-Anpassungswert variiert.

5. Verfahren gemäß Anspruch 2, wobei sich der Bereich der Intensitätswerte der Pixel des primären Bilds zwischen einer primären Minimum-Intensität und einer primären Maximum-Intensität erstreckt und der Leuchtdichtefaktor linear zwischen der primären Minimum-Intensität und einer primären Maximum-Intensität variiert.

6. Verfahren gemäß Anspruch 5, wobei die sekundäre Minimum-Intensität größer ist als die primäre Minimum-Intensität und die sekundäre Maximum-Intensität geringer ist als die primäre Maximum-Intensität.

7. Handgehaltene Computervorrichtung, die aufweist:
eine Flüssigkristallanzeige; und
einen Anzeigeprozessor, der mit der Flüssigkristallanzeige verbunden ist, wobei der Anzeigeprozessor aufweist:
Pixelzuordnungsmittel zum Zuordnen von Pixeldaten eines primären Bilds zu Pixeldaten eines sekundären Bilds, wobei die primären und sekundären Bilder jeweils eine Vielzahl von Pixeln aufweisen, die durch die jeweiligen Pixeldaten definiert sind, wobei die Pixeldaten Intensitätswerte für jeden dieser Pixel aufweisen, wobei das Pixelzuordnungsmittel konfiguriert ist zum Zuordnen der Pixeldaten durch Anwenden eines Gain- bzw. Leuchtdichte-Faktors auf die Intensitätswerte der Pixel in dem primären Bild, wobei ein Bereich der Intensitätswerte der Pixel des sekundären Bilds kleiner ist als ein Bereich der Intensitätswerte der Pixel des primären Bilds;
Identifizierungsmittel zum Identifizieren von Linien in dem sekundären Bild, die angeordnet sind, um Cross-Talk zu erzeugen, wobei das Linienidentifizierungsmittel konfiguriert ist zum Identifizieren der Linien, für jede Linie in dem sekundären Bild, durch Berechnen eines Durchschnittsintensitätswerts für alle Pixel in der Linie und Vergleichen des berechneten Durchschnittsintensitätswerts mit einem vorgegebenen Schwellenwert;
Skalierungsmittel zum Anwenden eines jeweiligen Skalierungsfaktors auf den Intensitätswert jedes Pixels in jeder identifizierten Linie, wobei der Skalierungsfaktor ein Minimum-Anpassungswert ist für die Pixel am wenigsten anfällig für Cross-Talk, ein Maximum-Anpassungswert ist für die Pixel am meisten anfällig für Cross-Talk und ansonsten eine variable Anpassung ist zwischen dem Minimum-Anpassungswert und dem Maximum-Anpassungswert, bestimmt basierend auf dem Intensitätswert des jeweiligen Pixels; und
Abbildungsmittel zum Rendern, auf der Flüssigkristallanzeige, eines Anzeigebilds aus den Pixeldaten, die aus dem Skalierungsmittel resultieren, wobei der Skalierungsfaktor derart gewählt wird, dass das gerenderte Bild weniger Cross-Talk hat als wenn es aus den Pixeldaten des primären Bilds gerendert wird.

8. Handgehaltene Computervorrichtung gemäß Anspruch 7, wobei die Intensitätswerte der Pixel des sekundären Bilds zwischen einer sekundären Minimum-Intensität und einer sekundären Maximum-Intensität sind und das Skalierungsmittel konfiguriert ist, die Skalierungsfaktoren derart zu wählen, dass für die Pixel in den identifizierten Linien die Intensitätswerte nahe der sekundären Maximum-Intensität mit einer größeren Anpassung vorgesehen sind als die Intensitätswerte nahe der sekundären Minimum-Intensität.

9. Handgehaltene Computervorrichtung gemäß Anspruch 8, wobei das Skalierungsmittel konfiguriert ist, die Intensitätswerte der Pixel derart zu manipulieren, dass ein Bereich der Intensitätswerte der Pixel der identifizierten Linien des gerenderten Bilds größer ist als ein Bereich der Intensitätswerte der Pixel der entsprechenden Linien des sekundären Bilds, aber kleiner als ein Bereich der Intensitätswerte der Pixel der entsprechenden Linien des primären Bilds.

10. Handgehaltene Computervorrichtung gemäß Anspruch 9, wobei die variable Anpassung linear zwischen dem Minimum-Anpassungswert und dem Maximum-Anpassungswert variiert.

11. Handgehaltene Computervorrichtung gemäß Anspruch 8, wobei sich der Bereich der Intensitätswerte der Pixel in dem primären Bild zwischen einer primären Minimum-Intensität und einer primären Maximum-Intensität erstreckt und der Leuchtdichtefaktor linear zwischen der primären Minimum-Intensität und einer primären Maximum-Intensität variiert.

12. Handgehaltene Computervorrichtung gemäß Anspruch 11, wobei die sekundäre Minimum-Intensität größer ist als die primäre Minimum-Intensität und die sekundäre Maximum-Intensität geringer ist als die primäre Maximum-Intensität.

13. Computerlesbares Medium, das Verarbeitungsanweisungen für eine Computervorrichtung trägt, die bei Ausführung die Computervorrichtung veranlassen, ein Verfahren zum Reduzieren von Cross-Talk auf einer Flüssigkristallanzeige gemäß einem der Ansprüche 1 bis 6 zu implementieren.

## Revendications

1. Procédé de réduction de la diaphonie sur un écran à cristaux liquides, comprenant les étapes consistant :
à transposer des données de pixel d'une image primaire en données de pixel d'une image secondaire, les images primaire et secondaire comprenant chacune une pluralité de pixels définis par les données respectives de pixel, les données de pixel comprenant des valeurs d'intensité pour chaque dit pixel, la transposition de données de pixel comprenant l'application d'un facteur de gain aux valeurs d'intensité des pixels de l'image primaire, la plage des valeurs d'intensité des pixels de l'image secondaire étant plus petite que la plage des valeurs d'intensité des pixels de l'image primaire ;
à identifier des lignes de l'image secondaire disposées pour créer de la diaphonie, l'identification de lignes comprenant, pour chaque dite ligne de l'image secondaire, le calcul d'une valeur moyenne d'intensité pour tous les pixels de ladite ligne et la comparaison du niveau de l'intensité moyenne calculée à un seuil prédéterminé, dans chaque dite ligne identifiée, la valeur d'intensité moyenne associée étant plus grande que le seuil prédéterminé ; et
à ajuster les valeurs d'intensité de pixel dans les lignes identifiées de façon qu'une image affichée rendue sur un écran à cristaux liquides résultant de l'ajustement d'intensité de pixel ait moins de diaphonie que si elle était rendue à partir des données de pixel de l'image primaire, l'ajustement d'intensité de pixel comprenant l'application d'un facteur de pondération respectif à la valeur d'intensité de chaque dit pixel dans chaque dite ligne identifiée, le facteur de pondération étant une valeur minimale d'ajustement pour les pixels les moins enclins à la diaphonie, une valeur maximale d'ajustement pour les pixels les plus enclins à la diaphonie, et autrement un ajustement variable entre la valeur minimale d'ajustement et la valeur maximale d'ajustement déterminé en se basant sur la valeur d'intensité du pixel respectif.

2. Procédé selon la revendication 1, dans lequel les valeurs d'intensité de pixel de l'image secondaire sont entre une intensité minimale secondaire et une intensité maximale secondaire, et dans lequel les facteurs de pondération sont choisis de façon telle que, pour les pixels dans les lignes identifiées, l'on donne aux valeurs d'intensité proches de l'intensité maximale secondaire un ajustement plus grand qu'aux valeurs d'intensité proches de l'intensité minimale secondaire.

3. Procédé selon la revendication 2, dans lequel la plage des valeurs d'intensité des pixels des lignes identifiées de l'image rendue est plus grande que la plage des valeurs d'intensité des pixels des lignes correspondantes de l'image secondaire, mais plus petite que la plage des valeurs d'intensité des pixels des lignes correspondantes de l'image primaire.

4. Procédé selon la revendication 3, dans lequel l'ajustement variable varie linéairement entre la valeur minimale d'ajustement et la valeur maximale d'ajustement.

5. Procédé selon la revendication 2, dans lequel la plage des valeurs d'intensité des pixels de l'image primaire s'étend entre une intensité minimale primaire et une intensité maximale primaire, et dans lequel le facteur de gain varie linéairement entre l'intensité minimale primaire et l'intensité maximale primaire.

6. Procédé selon la revendication 5, dans lequel l'intensité minimale secondaire est plus grande que l'intensité minimale primaire, et l'intensité maximale secondaire est plus petite que l'intensité maximale primaire.

7. Dispositif de poche de traitement de l'information comprenant :
un écran à cristaux liquides ; et
un processeur d'affichage associé à l'écran à cristaux liquides, le processeur d'affichage comprenant :
un moyen de transposition de pixels destiné à transposer des données de pixel d'une image primaire en données de pixel d'une image secondaire, les images primaire et secondaire comprenant chacune une pluralité de pixels définis par les données respectives de pixel, les données de pixel comprenant des valeurs d'intensité pour chaque dit pixel, le moyen de transposition de pixel étant constitué pour transposer les données de pixel par l'application d'un facteur de gain aux valeurs d'intensité des pixels de l'image primaire, la plage des valeurs d'intensité des pixels de l'image secondaire étant plus petite que la plage des valeurs d'intensité des pixels de l'image primaire ;
un moyen d'identification destinée à identifier des lignes de l'image secondaire disposées pour créer de la diaphonie, le moyen d'identification de lignes étant constitué pour identifier les lignes, pour chaque dite ligne de l'image secondaire, par le calcul d'une valeur moyenne d'intensité pour tous les pixels de ladite ligne et la comparaison de la valeur d'intensité moyenne calculée à un seuil prédéterminé ;
un moyen de mise à l'échelle destiné à appliquer un facteur d'échelle respectif à la valeur d'intensité de chaque dit pixel dans chaque dite ligne identifiée, le facteur d'échelle étant une valeur minimale d'ajustement pour les pixels les moins enclins à la diaphonie, une valeur maximale d'ajustement pour les pixels les plus enclins à la diaphonie, et autrement un ajustement variable entre la valeur minimale d'ajustement et la valeur maximale d'ajustement déterminé en se basant sur la valeur d'intensité du pixel respectif ; et
un moyen de formation d'image destiné à rendre sur l'écran à cristaux liquides une image d'affichage à partir des données de pixel résultant du moyen de pondération, le facteur de pondération étant choisi de façon que l'image rendue ait moins de diaphonie que si elle était rendue à partir des données de pixel de l'image primaire.

8. Dispositif de poche de traitement de l'information selon la revendication 7, dans lequel les valeurs d'intensité de pixel de l'image secondaire sont entre une intensité minimale secondaire et une intensité maximale secondaire, et dans lequel le moyen de mise à l'échelle est constitué pour choisir les facteurs d'échelle de façon telle que, pour les pixels dans les lignes identifiées, l'on donne aux valeurs d'intensité proches de l'intensité maximale secondaire un ajustement plus grand qu'aux valeurs d'intensité proches de l'intensité minimale secondaire.

9. Dispositif de poche de traitement de l'information selon la revendication 8, le moyen de pondération est constitué pour manipuler les valeurs d'intensité des pixels de façon que la plage des valeurs d'intensité des pixels des lignes identifiées de l'image rendue soit plus grande que la plage des valeurs d'intensité des pixels des lignes correspondantes de l'image secondaire, mais plus petite que la plage des valeurs d'intensité des pixels des lignes correspondantes de l'image primaire.

10. Dispositif de poche de traitement de l'information selon la revendication 9, dans lequel l'ajustement variable varie linéairement entre la valeur minimale d'ajustement et la valeur maximale d'ajustement.

11. Dispositif de poche de traitement de l'information selon la revendication 8, dans lequel la plage des valeurs d'intensité des pixels de l'image primaire s'étend entre une intensité minimale primaire et une intensité maximale primaire, et dans lequel le facteur de gain varie linéairement entre l'intensité minimale primaire et l'intensité maximale primaire.

12. Dispositif de poche de traitement de l'information selon la revendication 11, dans lequel l'intensité minimale secondaire est plus grande que l'intensité minimale primaire, et l'intensité maximale secondaire est plus petite que l'intensité maximale primaire.

13. Support lisible par processeur portant des instructions de traitement pour un dispositif de traitement de l'information qui, lorsqu'elles sont exécutées, font que le dispositif de traitement de l'information met en oeuvre un procédé de réduction de la diaphonie sur un écran à cristaux liquides selon l'une quelconque des revendications 1 à 6.
